# EUROPÄISCHE PATENTANMELDUNG

(11) **EP 3 922 756 A1**
(43) Veröffentlichungstag der Anmeldung: **15.12.2021**
(21) Anmeldenummer: 21172025.5
(22) Anmeldetag: 04.05.2021
(51) Int. Cl.: C23C 24/04, B01D 67/00, B01D 71/02, C23C 24/08, C23C 24/10, G01M 3/00

(54) **VERFAHREN ZUR HERSTELLUNG EINES BAUTEILS MIT DEFINIERTER POROSITÄT UND BAUTEIL**

(30) Priorität: 10.06.2020 DE 102020207245
(71) Anmelder: Forschungszentrum Jülich GmbH, 52425 Jülich (DE)
(72) Erfinder: HOVEN, Carsten, 52441 Linnich (DE); BODEWIG, Marcel, 50189 Elsdorf (DE); PAULY, Dipl.-Ing. Fred, 52428 Jülich (DE); NATOUR, Prof. Dr. Ghaleb, 52159 Roetgen (DE)
(74) Vertreter: Gille Hrabal Partnerschaftsgesellschaft mbB Patentanwälte

(57) **Zusammenfassung**

Die Erfindung betrifft ein Verfahren zur Herstellung eines zumindest bereichsweise porösen Bauteils, ein Bauteil, sowie eine Verwendung eines Bauteils. In dem Verfahren zur Herstellung eines zumindest bereichsweise porösen Bauteils (10) wird zumindest ein poröser erster Bereich (11) eines Bauteils (10) durch Kaltgasspritzen hergestellt. So lässt sich mit besonders geringem technischem Aufwand eine definierte Porosität einstellen.

## Beschreibung

Die Erfindung betrifft ein Verfahren zur Herstellung eines zumindest bereichsweise porösen Bauteils, ein Bauteil sowie eine Verwendung eines Bauteils.

Poröse Bauteile bzw. Bauteile mit definierter Porosität werden unter anderem in Trennverfahren und für die Funktionsüberprüfung und Kalibrierung von Leckdetektoren für die Dichtheitsprüfung genutzt. In Trennverfahren ist dabei für einen Größenausschluss des zu trennenden Stoffgemischs eine definierte Porengröße bedeutsam. Im Zusammenhang mit Leckdetektoren ist eine definierte Gasdurchlässigkeit, häufig ausgedrückt als Leckagerate, die maßgebliche Eigenschaft.

Prüflecks, auch als Referenzlecks oder Testlecks bezeichnet, zeichnen sich durch eine weitgehend konstante Leckagerate über einen langen Zeitraum aus. Damit können Leckdetektoren überprüft und kalibriert werden.

Es sind unterschiedliche Bauteile mit definierter Porosität und Prozesse zu deren Herstellung bekannt. Beispielsweise sind Permeationsmembranen bekannt, die für Trennverfahren und als Prüflecks eingesetzt werden. In der Praxis werden Permeationsmembranen üblicherweise mit einem fest verbundenen Gasvorrat genutzt.

Weiter werden als Prüflecks organische Grenzflächen wie Kunststoff- bzw. Elastomerfolien eingesetzt.

Auch anorganische Grenzflächen werden in Form von Quarz bzw. Quarzglas als Prüflecks genutzt, üblicherweise mit Helium als Prüfgas. Anorganische Grenzflächen aus Palladium sind z. B. für Wasserstoff und bei hohen Temperaturen nutzbar.

Darüber hinaus sind nano-/mikroporöse Membranen bekannt. Beispielsweise werden Glaskapillaren als Kapillarlecks genutzt. Diese weisen bei der Herstellung jedoch große Schwankungen im Durchmesser und damit in der Gasdurchlässigkeit auf. Gequetschte Metallkapillaren sind leicht herstellbar, durch die Elastizität des Materials ist die Gasdurchlässigkeit aber nicht dauerhaft gleichbleibend. Durch den sehr geringen Querschnitt an einer einzigen Stelle besteht zudem die Gefahr einer Verstopfung.

Es ist Aufgabe der Erfindung, ein zumindest bereichsweise poröses Bauteil verbessert und mit besonders geringem technischen Aufwand herzustellen.

Die Aufgabe wird gelöst durch das Verfahren zur Herstellung eines zumindest bereichsweise porösen Bauteils gemäß Anspruch 1 sowie durch ein Bauteil und die Verwendung eines Bauteils gemäß den nebengeordneten Ansprüchen.

Zur Lösung der Aufgabe dient ein Verfahren zur Herstellung eines zumindest bereichsweise porösen Bauteils. Dabei wird zumindest ein poröser erster Bereich eines Bauteils durch Kaltgasspritzen hergestellt.

Versuche haben gezeigt, dass durch Kaltgasspritzen überraschend eine sehr gleichbleibende Porosität eingestellt werden kann. Einerseits kann die Porosität durch geeignete Parameter auf definierte Weise eingestellt werden. Andererseits bleibt die somit hergestellte Porosität dauerhaft gleich, ohne dass besondere Anforderungen an die Lagerung eines derart hergestellten Bauteils bestehen. Beispielsweise kann eine definierte Gasdurchlässigkeit hergestellt werden, wie sie etwa zur Herstellung von Prüflecks zur Funktionsüberprüfung und Kalibrierung von Leckdetektoren benötigt wird. Ebenso hinaus kann das Bauteil zur Durchführung von Trennverfahren, beispielsweise als Filter für feine Korngrößen genutzt werden. Ein weiterer Vorteil des erfindungsgemäßen Verfahrens ist, dass damit poröse Materialschichten auf beliebige Oberflächen aufgetragen werden können.

Zumindest der erste Bereich des Bauteils ist porös. Es kann auch das gesamte Bauteil durch Kaltgasspritzen porös hergestellt werden. Typischerweise ist das Bauteil bzw. der erste Bereich eine poröse dreidimensionale Struktur.

Die Porosität ist größer als null. Dennoch kann sie sehr gering sein, sodass beispielsweise die Gasdurchlässigkeit des Bauteils bzw. ersten Bereichs grundsätzlich sehr gering ist beschränkt ist. Insbesondere ist eine offenporige Porosität gemeint, also eine Porosität, bei der nur die offenen Poren berücksichtigt sind. Diese erlauben einen Durchlass von Gasen, Flüssigkeiten und/oder Feststoffpartikeln. Neben den offenen Poren kann das Bauteil geschlossene Poren aufweisen.

Der erste Bereich bzw. das gesamte Bauteil ist porös. Insbesondere weist er bzw. es eine definierte Porosität auf. Eine definierte Porosität meint eine Porosität innerhalb eines gewünschten Wertebereichs. Die konkrete Porosität wird durch Prozessparameter beeinflusst bzw. eingestellt. Die Porosität bzw. Gasdurchlässigkeit kann beispielsweise anhand einer Leckagerate beschrieben werden. Der poröse Bereich des Bauteils kann auch als definierte Leckage bezeichnet werden.

Kaltgasspritzen ist ein Verfahren des thermischen Spritzens. Grundsätzlich werden beim thermischen Spritzen pulverförmige Werkstoffe in einen Gasstrom eingebracht, beschleunigt und auf die Oberfläche eines zu beschichtenden Bauteils geschleudert. Der Gasstrom und/oder die Partikel können erhitzt werden. Mit anderen Worten wird ein Gasstrom mit zu spritzenden Partikeln erzeugt. Diese prallen in geschmolzenem, angeschmolzenem oder plastifiziertem Zustand auf die Oberfläche. Die Partikel haften an der Oberfläche und bilden lagenweise eine Spritzschicht aus. Beim Kaltgasspritzen erfolgt dies im festen Zustand bzw. es erfolgt eine Plastifizierung der Oberfläche beim Aufprall.

Beim Kaltgasspritzen werden die Partikel eines pulverförmigen Grundwerkstoffs so hoch beschleunigt, dass sie ohne vorangehendes An- oder Aufschmelzen beim Aufprall auf das Substrat eine dichte und fest haftende Schicht bilden. Das Pulver haftet durch mechanische Verklammerungen, Adhäsionskräfte, metallurgische Wechselwirkungen wie Diffusionsvorgänge und/oder über die Ausbildung von Scherinstabilitäten. Typischerweise erfolgt die Beschleunigung des Prozessgases auf Überschallgeschwindigkeit, beispielsweise zwischen 300 m/s und 600 m/s. Die Beschleunigung kann in einer Düse, insbesondere einer Lavaldüse, erfolgen. Sie erfolgt insbesondere vor Injektion der Partikel in den Prozessgasstrom. Die Injektion erfolgt typischerweise ebenfalls in der Düse. Die Injektion und Beschleunigung der Partikel kann auf dem Venturi-Effekt beruhen. Das Prozessgas hat typischerweise eine Temperatur zwischen 100 °C und 900 °C, insbesondere zwischen 300 °C und 600°C. Diese kann vor der Beschleunigung eingestellt werden. Durch Partikeltemperaturen unterhalb des Schmelzpunktes ist der Wärmeeintrag in die Bauteiloberfläche deutlich geringer als bei anderen thermischen Spritzverfahren. Auf diese Weise werden unerwünschte Veränderungen des Substrats durch einen Wärmeeintrag verhindert. Auch wärmeempfindliche Materialien können für das Bauteil bzw. für den ersten und/oder zweiten Bereich des Bauteils genutzt werden. Erfindungsgemäß wird durch Kaltgasspritzen eine Schicht hergestellt, die zumindest bereichsweise porös ist. Auf diese Weise wird eine sehr definierte Schicht des Materials aufgetragen. Auch weist die Porosität ab einer Untergrenze von etwa 1 mm keine wesentliche Abhängigkeit von der Schichtdicke auf, sodass die Porosität auf besonders einfache Weise herstellbar ist.

Insbesondere umfasst das Verfahren die Wahl einer geeigneten Porosität auf der Basis der Anforderungen an das herzustellende Bauteil. Es kann weiterhin die Einstellung zumindest eines Prozessparameters für das Kaltgasspritzen umfassen.

In einer Ausgestaltung wird durch das Kaltgasspritzen Material auf einen zweiten Bereich des Bauteils aufgebracht.

Mit anderen Worten weist das Bauteil wenigstens einen porösen ersten Bereich, der durch Materialauftrag mittels Kaltgasspritzen hergestellt ist, sowie zumindest einen davon verschiedenen zweiten Bereich auf, der als Grundlage bzw. Substrat für den Materialauftrag durch Kaltgasspritzen dient. Insbesondere ist der zweite Bereich des Bauteils mit einem vom Kaltgasspritzen verschiedenen Verfahren hergestellt. Die Herstellung des zweiten Bereichs des Bauteils kann auch vom erfindungsgemäßen Verfahren umfasst sein.

Kaltgasspritzen ist geeignet, Material auf den Randbereich eines Bauteils aufzubringen und die Fläche des Bauteils auf diese Weise zu vergrößern. Beispielsweise können so auch größere Löcher in Anlagen verschlossen werden. Mit anderen Worten wird das Kaltgasspritzen nicht als reines Beschichtungsverfahren ausgeführt, sondern dient der Herstellung von Bauteilbereichen durch Urformen. So kann der zweite Bereich des Bauteils außen am Bauteil angeordnet sein und das Bauteil mit dem aufgetragenen Material kann eine größere Oberfläche aufweisen als das Bauteil vor dem Materialauftrag.

Alternativ ist die Herstellung eines Bauteils ausschließlich mittels Kaltgasspritzen möglich, beispielsweise durch Herstellung zumindest einer porösen Schicht auf einem Trägermedium und anschließendes Entfernen des Trägermediums. Dabei kann mittels wenigstens einer Blende ein Teil eines Trägermediums maskiert werden und auf diese Weise an einer definierten Position mittels Kaltgasspritzen Material angeordnet werden. Auch beim Auftrag von Material auf einen zweiten Bereich des Bauteils ist die Verwendung einer Blende möglich, beispielsweise anstelle eines Verschließens einer Öffnung des Bauteils, um die Position des Materialauftrags zu definieren bzw. einzugrenzen.

In einer Ausgestaltung wird eine Öffnung des Bauteils durch das Kaltgasspritzen wenigstens teilweise verschlossen.

Insbesondere umfasst das Verfahren auch die Herstellung der Öffnung in dem Bauteil. Insbesondere wird die Öffnung teilweise verschlossen, da die durch das Kaltgasspritzen hergestellte Schicht eine gewisse Durchlässigkeit aufweist. Diese kann makroskopisch nicht sichtbar sein, sodass die Öffnung dem Anschein nach vollständig verschlossen sein kann. Die Öffnung wird vor dem Kaltgasspritzen hergestellt, beispielsweise durch ein spanendes bzw. spanabhebendes Verfahren wie etwa Bohren.

Diese Ausgestaltung ermöglicht die Herstellung eines Bauteils mit einer besonders genau eingestellten Porosität. Die Größe der Öffnung kann dabei den Anforderungen an die absolute Gasdurchlässigkeit bzw. Leckagerate entsprechend gewählt werden. Ist ein sehr geringer Wert gewünscht, kann beispielsweise eine sehr kleine Öffnung gewählt werden.

In einer Ausgestaltung ist die Öffnung in einer Ausnehmung des Bauteils angeordnet.

Eine Ausnehmung meint einen Bereich, an dem zumindest eine Abmessung des Bauteils reduziert ist. Sie kann insbesondere eine Vertiefung sein. Die Ausnehmung kann beispielsweise ein Sackloch mit größerem Durchmesser als dem Durchmesser der Öffnung sein. Sie kann mittels Spanen hergestellt, beispielsweise gefräst oder gebohrt sein.

Die Ausnehmung wurde insbesondere zuvor hergestellt. Das Verfahren kann die Herstellung der Öffnung und/oder der Ausnehmung umfassen. Auf diese Weise kann die Herstellung der Öffnung auf besonders einfache Weise und mit geringem technischem Aufwand erfolgen. Insbesondere muss dazu weniger Material entfernt werden. Dies ist insbesondere bei mechanischen Verfahren zur Herstellung sehr kleiner Öffnungen vorteilhaft.

In einer Ausgestaltung besteht das durch Kaltgasspritzen aufgebrachte Material aus einem metallischen Werkstoff oder aus einem Gemisch aus zumindest einem metallischen und zumindest einem keramischen Werkstoff. Insbesondere umfasst es Kupfer, Nickel und/oder Titan.

Ein metallischer Werkstoff ist ein Werkstoff mit metallischen Eigenschaften. Insbesondere ist ein Metall, eine Mischung von Metallen oder eine Legierung gemeint. Grundsätzlich sind metallische Werkstoffe geeignet für das erfindungsgemäße Verfahren.

Nickel als Grundwerkstoff zum Kaltgasspritzen hat in Versuchen besonders gleichbleibende und reproduzierbare Ergebnisse erzielt, da es beim Kaltgasspritzen eine vergleichsweise geringe Verformung erfährt, sodass die Porosität fein einstellbar ist. Weiterhin weist Nickel nur eine sehr geringe Neigung zur Oxidation auf und ist somit hinsichtlich der eingestellten Porosität bzw. Leckagerate über lange Zeit stabil. Dabei kann es sich um mehrere Jahre handeln. Insbesondere wird ein nicht-rostender bzw. korrosionsbeständiger Werkstoff genutzt, da auf diese Weise eine dauerhaft gleichbleibende Porosität herstellbar ist. Auch bei Metallen sind bei Lagerung an der Luft überraschend keine nachteiligen Korrosionseffekte beobachtet worden.

Mit metallischen Werkstoffen lassen sich auf reproduzierbare Weise besonders geringe Porositäten herstellen, da die metallischen Partikel beim Aufprall verformt werden und so die Poren teilweise verschließen.

Insbesondere weist der für das Kaltgasspritzen verwendete Grundwerkstoff eine Partikelgröße zwischen 1 µm und 65 µm auf, insbesondere zwischen 25 µm und 65 µm. Der letztgenannte Bereich zeichnet sich durch seine Praxistauglichkeit und den geringen technischen Aufwand aus. Durch Veränderung der Partikelgröße lässt sich die Porosität gezielt einstellen.

Auch keramische Werkstoffe können als Pulvergemisch als Grundwerkstoff für das Kaltgasspritzen verwendet werden. Insbesondere werden sie in Form eines Pulvers mit metallischem Pulver gemischt. Hierdurch lassen sich andere Porositäten einstellen, da die Verformung der Partikel beim Aufprall geringer ist als bei metallischen Materialien oder ggf. überhaupt keine Verformung auftritt. Beispielsweise können Gemische mit Al₂O₃-Pulver verwendet werden. Keramische Werkstoffe weisen zudem den Vorteil der Korrosionsbeständigkeit auf.

In einer Ausgestaltung wird das Kaltgasspritzen als Niederdruck-Kaltgasspritzen ausgeführt.

Beispielsweise beträgt der Druck des Prozessgases zwischen 5 bar und 10 bar. Alternativ kann das Kaltgasspritzen als Hochdruck-Kaltgasspritzen ausgeführt werden. Dabei beträgt der Druck des Prozessgases beispielsweise zwischen 25 bar und 30 bar. Der Druck des Prozessgases bezieht sich insbesondere auf eine Position vor der Erhitzung und/oder der Injektion der Partikel.

Die Injektion der Partikel in den Prozessgasstrom bzw. in die Düse kann in Bezug zur Düse radial, also von der Seite, oder axial erfolgen. Die Achse der Düse verläuft entlang der Ausströmrichtung. Als Prozessgas kann beispielsweise Luft, Stickstoff oder Helium genutzt werden. Diese Ausgestaltung erlaubt aufgrund des geringeren Drucks eine Herstellung des Bauteils mit besonders geringem technischem Aufwand.

In einer Ausgestaltung umfasst das Bauteil einen metallischen Werkstoff wie beispielsweise Edelstahl oder Titan.

Insbesondere besteht der nicht mittels Kaltgasspritzen hergestellte Teil des Bauteils aus dem metallischen Werkstoff. Derartige metallische Bauteile sind besonders einfach und mit geringem technischen Aufwand herstellbar. Sie sind besonders geeignet zur definierten und reproduzierbaren Anbindung von Partikeln beim Kaltgasspritzen. Auch für den Einsatz als Prüfleck sind metallische Bauteile gut geeignet.

In einer Ausgestaltung wird das Bauteil nach dem Kaltgasspritzen einer Wärmebehandlung unterzogen. Auf diese Weise können die Eigenschaften des Bauteils auf gewünschte Weise verändert bzw. eingestellt werden. Insbesondere kann die Leckagerate beeinflusst, beispielsweise verringert werden.

Ein zweiter Aspekt der Erfindung ist ein Bauteil. Dieses umfasst zumindest einen porösen ersten Bereich, welcher durch Kaltgasspritzen hergestellt ist. Es umfasst insbesondere weiterhin einen zweiten Bereich, auf welchem der erste Bereich angeordnet ist. Insbesondere verschließt der erste Bereich eine Öffnung des Bauteils wenigstens teilweise.

Der erste Bereich oder das gesamte Bauteil ist durch Kaltgasspritzen hergestellt und weist eine Porosität auf, insbesondere eine definierte Porosität. Das Bauteil kann als Prüfleck oder für ein Trennverfahren verwendet werden. Alle Merkmale und Ausführungsformen des eingangs beschriebenen Aspekts der Erfindung gelten ebenso für diesen und alle nachfolgenden Aspekte der Erfindung. Insbesondere ist das Bauteil mit dem erfindungsgemäßen Verfahren hergestellt.

Der erste Bereich ist auf dem zweiten Bereich angeordnet. Insbesondere kontaktieren sich der erste Bereich und der zweite Bereich an einer Kontaktfläche. Die Kontaktfläche ist insbesondere geringer als die flächige Ausdehnung des ersten Bereichs. Die Kontaktfläche umgibt insbesondere die Öffnung des Bauteils. Die Öffnung ist im zweiten Bereich des Bauteils ausgebildet.

In einer Ausgestaltung ist das Bauteil als ein Behälter, insbesondere Druckbehälter bzw. Vakuumbehälter, mit einer definierten Leckage ausgestaltet. Dieser kann für Schulungszwecke genutzt werden, um die Leckage zu suchen und die Leckagerate zu quantifizieren.

Eine Leckagerate des Bauteils oder des ersten Bereichs des Bauteils kann kleiner oder gleich 2 * 10⁻⁶ mbar*l*s⁻¹ und/oder größer oder gleich 1 * 10⁻⁷ mbar*l*s⁻¹ sein. Sie kann kleiner als 5 * 10⁻⁷ mbar*l*s⁻¹ sein, insbesondere nach Durchführung einer Wärmebehandl ung.

Insbesondere weist der poröse Bereich des Bauteils die genannte Leckagerate auf. Die Gasdurchlässigkeit eines Bauteils wird insbesondere im Zusammenhang mit der Dichtheitsprüfung ausgedrückt als Leckagerate. Sie ist der Quotient aus dem pV-Wert eines Gases, welches während einer Zeitspanne durch einen Leitungsquerschnitt strömt, und der Zeitspanne. Der pV-Wert ist das Produkt aus Druck und Volumen einer Menge eines Gases bei der herrschenden Temperatur. Die Leckagerate ist ein Maß für die aus einem Körper, insbesondere einem Leck, austretenden Volumen- oder Masse-Einheiten des Gases. Sie wird verwendet, um die Größe einer Leckage anzugeben und um die Empfindlichkeit von Vorrichtungen zur Dichtheitsprüfung anzugeben. Die Leckagerate wird insbesondere mit der Vakuummethode mit Helium gemessen.

Die Porosität wird insbesondere so eingestellt, dass die Leckagerate im genannten Wertebereich liegt. Dies erfolgt typischerweise durch Wahl geeigneter Prozessparameter wie beispielsweise Temperatur und Geschwindigkeit des Gases und der Partikel, Art und Größe der Partikel, Abstand zum Bauteil, etc.

Ein Prüfleck mit einer Leckagerate in dieser Größe ist besonders geeignet für die Kalibrierung bei der Dichtheitsprüfung zur Ermittlung kleinster Leckagen. Ein Bauteil mit einer Leckagerate in dieser Größe lässt sich besonders gut mit dem erfindungsgemäßen Verfahren herstellen.

In einer Ausgestaltung ist die Öffnung in einer Ausnehmung des Bauteils angeordnet. In einer weiteren Ausgestaltung ist der erste Bereich eine Schicht mit einer Schichtdicke kleiner als 2 mm, insbesondere kleiner als 1 mm und beispielsweise kleiner als 0,5 mm.

In einer weiteren Ausgestaltung ist die Öffnung ein Durchgangsloch. Dieses weist eine maximale Ausdehnung von weniger als 1 mm senkrecht zur Erstreckungsrichtung der Öffnung auf. Insbesondere weist es einen Durchmesser von weniger als 1 mm auf.

Die Öffnung muss nicht notwendigerweise einen Kreisquerschnitt aufweisen. Sie ist in zumindest einer Ebene umlaufend von dem das Bauteil ausbildenden Material umgeben. Beispielsweise weist die Öffnung eine maximale Ausdehnung von weniger als 1 mm auf, insbesondere weniger als 0,5 mm und bevorzugt weniger als 0,1 mm. Die Ausdehnung kann entlang einer Richtung gemessen werden, die parallel zu einer Oberfläche des Bauteils verläuft, in welche die Öffnung eingebracht ist. Insbesondere ist sie der Durchmesser eines Bohrlochs.

In einer weiteren Ausgestaltung weist der erste Bereich eine quer zur Erstreckungsrichtung der Öffnung gemessene Erstreckung von weniger als 10 cm, insbesondere weniger als 5 cm auf. Insbesondere ist die Öffnung eine Durchgangsöffnung.

Ein weiterer Aspekt der Erfindung ist eine Verwendung eines mit dem erfindungsgemäßen Verfahren hergestellten Bauteils und/oder eines erfindungsgemäßen Bauteils zur Funktionsüberprüfung eines Leckdetektors, zur Kalibrierung eines Leckdetektors oder zur Durchführung eines Trennverfahrens.

Ein Leckdetektor ist eine Vorrichtung zur Dichtheitsprüfung von Anlagen oder Komponenten, also zur Quantifizierung einer Gasdurchlässigkeit. Insbesondere ist ein Helium-Leckdetektor gemeint. Der Leckdetektor kann eine Evakuierungseinrichtung zum Evakuieren der zu überprüfenden Komponente oder Anlage sowie eine Detektionseinrichtung zur Detektion mittels Unterdrucks durch das Leck strömenden Gases umfassen. Für die Dichtheitsprüfung wird weiterhin eine Vorrichtung zum Ausströmen von Gas wie beispielsweise Helium benötigt. Diese kann als Sprühpistole ausgestaltet sein und bei der erfindungsgemäßen Verwendung genutzt werden. Die Detektionseinrichtung kann zur Detektion eines Helium-Partialdrucks eingerichtet sein und zu diesem Zweck beispielsweise ein Sektorfeld-Massenspektrometer aufweisen. Der Leckdetektor kann eine Anzeigeeinheit zur Anzeige eines Messwerts aufweisen.

Insbesondere wird das erfindungsgemäße Bauteil als Prüfleck oder als auszuspürendes bzw. hinsichtlich seiner Leckagerate zu quantifizierendes Leck verwendet. Ein Prüfleck, auch als Referenzleck bezeichnet, zeichnet sich durch eine weitgehend konstante Leckagerate über einen langen Zeitraum aus, anhand derer andere Lecks oder Leckdetektoren beurteilt werden können.

Trennverfahren umfassen physikalische und/oder mechanische Trennverfahren wie etwa die Filtration. Dies kann Membranfiltration sein wie beispielswiese Mikrofiltration, Ultrafiltration, Nanofiltration, Umkehrosmose oder auch Gastrennung mittels Membran. Beispielsweise wird das Bauteil somit als Filter oder als Membran, beispielsweise semipermeable Membran, genutzt.

Ein weiterer Aspekt der Erfindung ist eine Vorrichtung zur Funktionsüberprüfung und/oder Kalibrierung eines Leckdetektors. Diese umfasst ein mit dem erfindungsgemäßen Verfahren hergestelltes Bauteil und/oder ein erfindungsgemäßes Bauteil sowie insbesondere den Leckdetektor.

Hierbei dient das Bauteil insbesondere als Prüfleck, also als Leck mit einer definierten Gasdurchlässigkeit.

Ein weiterer Aspekt der Erfindung ist eine Vorrichtung zur Durchführung eines Trennverfahrens. Diese umfasst ein mit dem erfindungsgemäßen Verfahren hergestelltes Bauteil und/oder ein erfindungsgemäßes Bauteil.

Die Vorrichtung dient der Durchführung eines Trennverfahrens, insbesondere eines mechanischen und/oder physikalischen Trennverfahrens wie oben beschrieben. Das Bauteil dient der Trennung, insbesondere basierend auf Größenausschluss. Die Trennung beruht darauf, dass ein Teil eines Stoffgemischs das Bauteil passieren kann und ein anderer Teil das Bauteil nicht passieren kann und somit zurückbleibt.

Ein weiterer Aspekt der Erfindung ist ein Verfahren zur Funktionsüberprüfung und/oder Kalibrierung eines Leckdetektors, bei dem ein Gas durch ein mit dem erfindungsgemäßen Verfahren hergestelltes Bauteil und/oder ein erfindungsgemäßes Bauteil geleitet wird, um die Funktion des Leckdetektors zu überprüfen und/oder den Leckdetektor zu kalibrieren.

Ein Gas im Sinne der Erfindung ist ein gasförmiger Stoff und kann somit ein Gasgemisch sein. Es wird eine Druckdifferenz und/oder Partialdruckdifferenz zwischen zwei Seiten des Bauteils erzeugt. Es wird mittels der Druckdifferenz bzw. Partialdruckdifferenz ein Gas, insbesondere in definierter Menge, in das Bauteil eingeleitet bzw. durch das Bauteil geleitet. Die Menge kann beispielsweise durch ein Volumen oder eine Masse quantifiziert sein. Das Vorhandensein und/oder die Menge des durch das Bauteil gelangenden Gases kann zwecks Funktionsüberprüfung bzw. Kalibrierung des Leckdetektors detektiert werden.

Eine Funktionsüberprüfung kann beispielsweise dergestalt erfolgen, dass ermittelt wird, ob die eingeleitete Menge und die detektierte Menge übereinstimmen. Eine Kalibrierung kann beispielsweise dergestalt erfolgen, dass ein Parameter des Leckdetektors nach Durchführung wenigstens einer Messung unter Berücksichtigung der Menge eingeleiteten Gases sowie einer erfassten Messgröße bezüglich des detektierten Gases geändert wird. Insbesondere kann dies ein Umrechnungsfaktor zur Umrechnung der Messgröße bezüglich des Gases in eine Gasdurchlässigkeit bzw. Leckagerate sein. Zum Zwecke der Ermittlung der genannten Übereinstimmung und/oder der Änderung eines Parameters ist grundsätzlich eine Steuereinrichtung vorgesehen.

In einer Ausgestaltung wird als Gas Helium genutzt. Helium kommt in der Umgebung lediglich in geringer natürlicher Konzentration vor, geht als Edelgas keine chemischen Reaktionen ein und kann mit hoher Selektivität nachgewiesen werden.

In einer Ausgestaltung wird auf einer Seite des Bauteils ein Unterdruck erzeugt. Mit anderen Worten wird die Vakuummethode durchgeführt. Üblicherweise ist die Gasdurchlässigkeit des Bauteils bei Durchführung des Verfahrens kleiner oder gleich 2*10⁻⁶ mbar*l*s⁻¹ und/oder größer oder gleich 1*10⁻⁷ mbar*l*s⁻¹. Auf diese Weise können sehr geringe Undichtigkeiten nachgewiesen werden.

Ein weiterer Aspekt der Erfindung ist ein Trennverfahren, bei dem ein Stoffgemisch ein mit dem erfindungsgemäßen Verfahren hergestelltes Bauteil und/oder ein erfindungsgemäßes Bauteil teilweise passiert, sodass es in zwei Teile getrennt wird.

Der erste Teil des Stoffgemischs verbleibt in Fließrichtung vor dem Bauteil, da er, beispielsweise aufgrund zu großer Partikeldurchmesser, das Bauteil nicht passieren kann. Der zweite Teil des Stoffgemischs passiert das Bauteil.

Nachfolgend wird die Erfindung auch anhand von Figuren näher erläutert. Der Schutzbereich der Ansprüche ist nicht auf die gezeigten Ausführungsbeispiele beschränkt. Den Figuren sind weitere vorteilhafte Ausgestaltungen sowie Wirkungen der Erfindung zu entnehmen.

Es zeigen
- Figur 1:: einen ersten Schritt eines Verfahrens zur Herstellung eines Bauteils;
- Figur 2:: ein mit dem Verfahren hergestelltes Bauteil;
- Figur 3:: eine schematische Darstellung einer Vorrichtung zum Kaltgasspritzen; sowie
- Figur 4:: eine schematische Darstellung einer weiteren Vorrichtung zum Kaltgasspritzen.

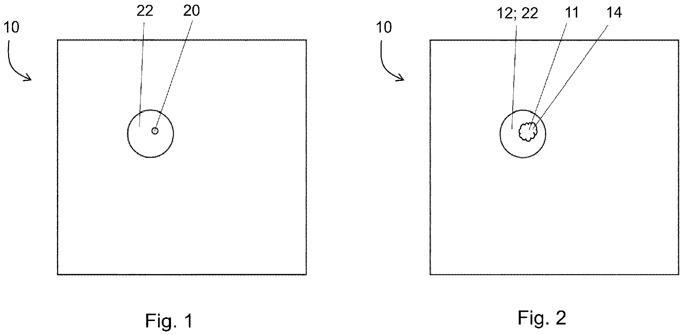

Figur 1 zeigt einen ersten Schritt zur Herstellung eines bereichsweise porösen Bauteils. Dargestellt ist eine Draufsicht auf ein ungefähr quadratisches Edelstahlblech mit einer Kantenlänge von 70 mm und einer Dicke von 2 mm. Dieses weist eine Ausnehmung 22 in Form eines einseitig durch Bohren eingebrachten Sacklochs mit einem Durchmesser von 3 mm und einer Tiefe von etwa 1,2 mm auf. Die Ausnehmung 22 kann auch als Vorbohrung bezeichnet werden. In der Ausnehmung 22 befindet sich eine Öffnung 20 in Form eines gebohrten Durchgangslochs mit einem Durchmesser von 0,07 mm. Die Öffnung 20 wurde nach der Ausnehmung 22 hergestellt. Die Darstellung ist zur Verbesserung der Erkennbarkeit nicht maßstabsgetreu.

Figur 2 zeigt das fertiggestellte Bauteil 10. Die Öffnung 20 wurde mittels Kaltgasspritzen verschlossen. Dabei wurde beschleunigtes pulverförmiges Material auf das die Öffnung 20 ausbildende Material aufgebracht, welches dort haften geblieben ist und die Öffnung Stück für Stück verschlossen hat. Als Material 14 wurde Nickelpulver genutzt.

Das aufgetragene Material 14 bildet somit einen porösen ersten Bereich 11 des Bauteils aus. Dieser wurde durch Kaltgasspritzen auf einem im Inneren der Ausnehmung 22 befindlichen zweiten Bereich 12 des Bauteils 10 hergestellt. Das Material 14 wurde auf den zweiten Bereich des Bauteils 10 aufgebracht. Der poröse erste Bereich 11 weist eine Leckagerate von etwa 5*10⁻⁶ mbar*l*s⁻¹ auf. Insbesondere beträgt die Schichtdicke des aufgetragenen Materials 14 weniger als 1 mm.

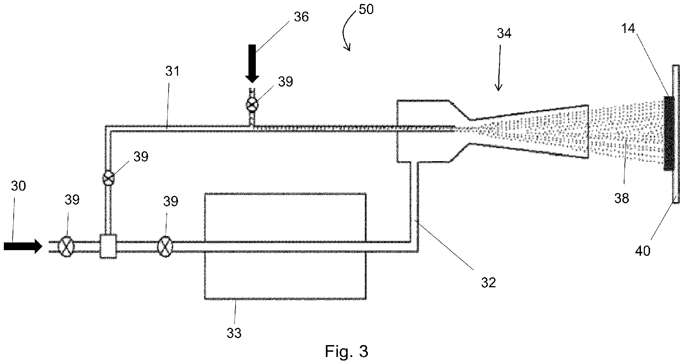

Figur 3 zeigt eine Vorrichtung 50 zum Kaltgasspritzen. Diese ist insbesondere zum Hochtemperatur-Kaltgasspritzen geeignet. Unter einem Druck von etwa 25 bar stehendes Prozessgas wird mittels einer Prozessgasversorgung 30 bereitgestellt. Es wird in einem T-Stück in den oberen Gasstrom 31 und den unteren zweiten Gasstrom 32 aufgeteilt. Dem oberen Gasstrom 31 wird mittels einer Pulverversorgung 36 das aufzutragende Pulver, der Grundwerkstoff, zugeführt. Der zweite Gasstrom 32 wird im Gaserhitzer 33 auf eine Temperatur von ca. 500 °C erhitzt, bevor er in die Überschalldüse 34 geleitet wird. Diese ist als Lavaldüse ausgestaltet. Ventile 39 dienen der Steuerung der Vorrichtung.

Der obere Gasstrom 31 wird axial, also entlang der Haupt-Ausströmrichtung, in die Düse eingeleitet bzw. injiziert. Dabei wird das Pulver durch den zweiten Gasstrom 32 auf eine Geschwindigkeit von ca. 500 m/s beschleunigt. Es bildet sich ein beschleunigter Partikelstrom 38 aus, der auf das Substrat 40 prallt und dort haften bleibt. Auf diese Weise wird eine Beschichtung aus aufgetragenem Material 14 hergestellt.

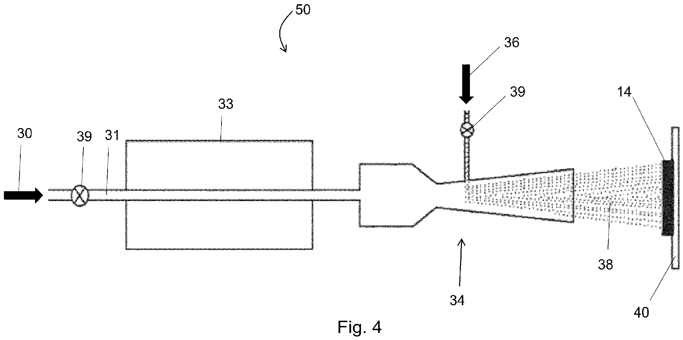

Figur 4 zeigt eine alternative Ausgestaltung einer Vorrichtung 50 zum Kaltgasspritzen. Um auf Dopplungen zu verzichten wird insbesondere auf die Unterschiede zur Vorrichtung aus Figur 3 eingegangen. Bezüglich der Gemeinsamkeiten wird auf die obige Beschreibung verwiesen.

In dieser Ausgestaltung, die insbesondere zum Niederdruck-Kaltgasspritzen genutzt wird, wird das Prozessgas mit einem Druck von ca. 8 bar bereitgestellt. Es wird lediglich ein einziger Gasstrom 31 erzeugt. Dieser wird im Gaserhitzer 33 erhitzt und in die Überschalldüse 34 eingeleitet. Die Injektion der Partikel erfolgt hier radial, also von der Seite.

**Bezugszeichenliste**

| | |
|---|---|
| Bauteil | 10 |
| Erster Bereich | 11 |
| Zweiter Bereich | 12 |
| Material | 14 |
| Öffnung | 20 |
| Ausnehmung | 22 |
| Prozessgasversorgung | 30 |
| Gasstrom | 31 |
| Zweiter Gasstrom | 32 |
| Gaserhitzer | 33 |
| Überschalldüse | 34 |
| Pulverversorgung | 36 |
| Partikelstrom | 38 |
| Ventil | 39 |
| Substrat | 40 |
| Vorrichtung | 50 |

Die Öffnung kann ein Durchgangsloch sein. Eine poröse Schicht, eine Membran, eine Pore oder eine Porenstruktur ist keine Öffnung im Sinne der Erfindung. Die Öffnung ist typischerweise dadurch gekennzeichnet, dass sie eine gerade Erstreckung aufweist. Die Erstreckung verläuft insbesondere im Wesentlichen senkrecht zu der Oberfläche, in welcher die Öffnung ausgebildet ist. Insbesondere verläuft die Öffnung entlang einer geraden Achse durch das Bauteil. Insbesondere wird das Bauteil so hergestellt und/oder ist so ausgestaltet, dass es nur eine einzige Öffnung aufweist. Insbesondere wird der erste Bereich so hergestellt, dass nur eine einzige Öffnung wenigstens teilweise verschlossen wird. Insbesondere ist das Bauteil so ausgestaltet, dass der erste Bereich nur eine einzige Öffnung wenigstens teilweise verschließt.

In einer Ausführungsform erfolgt zunächst die Herstellung der Öffnung und anschließend die Herstellung des ersten Bereichs, wobei die Öffnung dabei zumindest teilweise verschlossen wird. Beim Kaltgasspritzen wird Material auf eine erste Seite des Bauteils aufgebracht. Die der ersten Seite gegenüberliegende zweiten Seite des Bauteils kann beim Kaltgasspritzen an einer Unterlage anliegen bzw. darauf aufliegen. Insbesondere kann die Öffnung umlaufend an der Unterlage anliegen, sodass beim Kaltgasspritzen ein Hindurchströmen von Material durch die Öffnung verhindert wird. Insbesondere sind die Unterlage und die zweite Seite des Bauteils eben oder zumindest korrespondierend geformt. So kann eine besonders hohe Reproduzierbarkeit und Genauigkeit bei der Herstellung erreicht werden. Dies ist insbesondere unter kontrollierten Bedingungen vorteilhaft, beispielsweise bei der Herstellung von Prüflecks an kleineren Bauteilen.

In einer anderen Ausführungsform erfolgt zunächst die Herstellung des ersten Bereichs und anschließend die Herstellung der Öffnung. Beim Kaltgasspritzen wird Material auf eine erste Seite des Bauteils aufgebracht. Die Öffnung wird insbesondere von einer der ersten Seite gegenüberliegenden zweiten Seite in das Bauteil eingebracht. Mit anderen Worten wird der durch Kaltgasspritzen hergestellte erste Bereich durch die nachträgliche Herstellung der Öffnung zumindest teilweise freigelegt. Dies ist insbesondere vorteilhaft, wenn die zweite Seite nicht eben ist oder nicht so geformt ist, dass sie bündig an einer Unterlage anliegen kann. So wird verhindert, dass in diesen Fällen beim Kaltgasspritzen beschleunigtes Material durch die Öffnung hindurchströmt. Auf diese Weise kann auch in bestehenden Anlagen, zum Beispiel in gekrümmten Flächen wie etwa einer Behälterwandung, auf vergleichsweise reproduzierbare Weise ein Prüfleck mit definierter Leckagerate hergestellt werden.

Hierbei erfolgt die Herstellung der Öffnung beispielsweise durch Bohren. In einer Ausführungsform wird eine Öffnung mit einem Durchmesser unterhalb von 0,5 mm, insbesondere unterhalb von 0,1 mm und beispielsweise ca. 0,07 mm hergestellt.

In einer Ausführungsform wird die Öffnung mittels Funkenerodieren hergestellt. In einer Ausführungsform wird die Öffnung mittels Elektronenstrahlen oder mittels Laserstrahlung hergestellt, beispielsweise mittels Laserschneiden. Dies ermöglicht einen besonders konstanten Querschnitt der Öffnung. Alternativ kann die Öffnung mittels Plasmaschneiden oder autogenem Brennschneiden hergestellt sein.

Falls eine Ausnehmung hergestellt wird, erfolgt die Herstellung der Ausnehmung insbesondere vor der Herstellung des ersten Bereichs und/oder vor der Herstellung der Öffnung. Auf diese Weise wird die Herstellung einer sehr kleinen Öffnung erleichtert.

## Patentansprüche

1. Verfahren zur Herstellung eines zumindest bereichsweise porösen Bauteils (10), bei dem zumindest ein poröser erster Bereich (11) eines Bauteils (10) durch Kaltgasspritzen hergestellt wird.

2. Verfahren nach dem vorhergehenden Anspruch, bei dem durch das Kaltgasspritzen Material (14) auf einen zweiten Bereich (12) des Bauteils (10) aufgebracht wird.

3. Verfahren nach einem der vorhergehenden Ansprüche, bei dem eine Öffnung (20) des Bauteils (10) durch das Kaltgasspritzen wenigstens teilweise verschlossen wird.

4. Verfahren nach dem vorhergehenden Anspruch, wobei die Öffnung (20) in einer Ausnehmung (22) des Bauteils (10) angeordnet ist.

5. Verfahren nach einem der vorhergehenden Ansprüche, bei dem das durch Kaltgasspritzen aufgebrachte Material (14) aus einem metallischen Werkstoff oder aus einem Gemisch aus zumindest einem metallischen Werkstoff und zumindest einem keramischen Werkstoff besteht.

6. Verfahren nach einem der vorhergehenden Ansprüche, bei dem das Kaltgasspritzen als Niederdruck-Kaltgasspritzen ausgeführt wird.

7. Verfahren nach einem der vorhergehenden Ansprüche, bei dem das Bauteil (10) einen metallischen Werkstoff wie beispielsweise Edelstahl oder Titan umfasst.

8. Verfahren nach einem der vorhergehenden Ansprüche, bei dem das Bauteil (10) nach dem Kaltgasspritzen einer Wärmebehandlung unterzogen wird.

9. Bauteil (10), umfassend einen zweiten Bereich (12) sowie einen darauf angeordneten porösen ersten Bereich (11), welcher durch Kaltgasspritzen hergestellt ist, wobei der erste Bereich (11) eine Öffnung (20) des Bauteils (10) wenigstens teilweise verschließt.

10. Bauteil (10) nach dem vorhergehenden Anspruch, wobei die Öffnung (20) in einer Ausnehmung (22) des Bauteils (10) angeordnet ist.

11. Bauteil (10) nach einem der zwei vorhergehenden Ansprüche, wobei der erste Bereich (11) eine Schicht mit einer Schichtdicke kleiner als 1 mm ist.

12. Bauteil (10) nach einem der drei vorhergehenden Ansprüche, wobei die Öffnung (20) ein Durchgangsloch ist, welches eine maximale Ausdehnung von weniger als 1 mm senkrecht zur Erstreckungsrichtung der Öffnung (20) aufweist.

13. Bauteil (10) nach einem der vier vorhergehenden Ansprüche, wobei der erste Bereich eine quer zur Erstreckungsrichtung der Öffnung gemessene Erstreckung von weniger als 10 cm, insbesondere weniger als 5 cm aufweist.

14. Verwendung eines mit dem Verfahren gemäß einem der Ansprüche 1 bis 8 hergestellten Bauteils (10) und/oder eines Bauteils (10) gemäß einem der Ansprüche 9 bis 13 zur Funktionsüberprüfung eines Leckdetektors, zur Kalibrierung eines Leckdetektors oder zur Durchführung eines Trennverfahrens.
